# EUROPÄISCHE PATENTSCHRIFT

(11) **EP 3 744 068 B1**
(45) Veröffentlichungstag und Bekanntmachung des Hinweises auf die Patenterteilung: **11.08.2021**
(21) Anmeldenummer: 19832603.5
(22) Anmeldetag: 16.12.2019
(51) Int. Cl.: H04L 29/06, G06Q 10/10

(54) **VERFAHREN ZUR AUTOMATISIERTEN ERSTELLUNG EINES AN EINE VORGEGEBENE PERSON GERICHTETEN PHISHING-DOKUMENTS**
METHOD FOR AUTOMATED COMPOSING OF A PHISHING DOCUMENT ADDRESSED TO A PREDETERMINED PERSON
PROCÉDÉ POUR LA RÉDACTION AUTOMATIQUE D'UN DOCUMENT D'HAMMEÇONNAGE DESTINÉ À UNE PERSONNE DÉTERMINÉE

(30) Priorität: 17.01.2019 LU 101105
(43) Veröffentlichungstag der Anmeldung: 02.12.2020
(73) Patentinhaber: IT-Seal GmbH, 64295 Darmstadt (DE)
(72) Erfinder: DAVID, Kelm, 64293 Darmstadt (DE); CHRISTIAN, Klos, 64283 Darmstadt (DE)
(74) Vertreter: Habermann Intellectual Property Partnerschaft von Patentanwälten mbB
(86) Internationale Anmeldenummer: PCT/EP2019/085270
(87) Internationale Veröffentlichungsnummer: WO 2020/148046

(56) Entgegenhaltungen:
- US-A1- 2015 288 717
- US-A1- 2016 036 829
- US-A1- 2017 126 729

## Beschreibung

Derartige Phishing-Dokumente werden bei sogenannten Phishing-Angriffen verwendet, bei denen Phishing-Dokumente an eine Vielzahl von Personen versendet werden, um persönliche Daten und Informationen der von dem jeweiligen Phishing-Angriff betroffenen Person oder insbesondere dem Unternehmen zu erhalten, bei dem die Person beschäftigt ist. Zu diesem Zweck wird mittels gefälschter Webseiten, E-Mails, Kurznachrichten oder auch Telefonanrufen versucht, die Person zu einer bestimmten Reaktion oder auch zur unmittelbaren Herausgabe von Informationen zu bewegen. So ist es beispielsweise bekannt, durch Phishing-E-Mails den E-Mail-Empfänger dazu zu bewegen, eine an die E-Mail angefügte Datei oder einen in dem E-Mail-Text enthaltenen Hyperlink anzuklicken, wobei anschließend unbemerkt eine Schadsoftware auf dem Computer der von dem Phishing-Angriff betroffenen Person installiert wird. Diese Schadsoftware kann dann von der den Phishing-Angriff ausführenden Person dazu benutzt werden, weitere Informationen über die angegriffene Person oder das Unternehmen, wie beispielsweise Bankdaten zu erhalten. Bei derartigen Phishing-E-Mails, gefälschten Webseiten und Kurznachrichten (SMS) handelt es sich um Phishing-Dokumente im Sinne der Erfindung.

Phishing-Angriffe basieren grundsätzlich auf dem Ansatz, der angegriffenen Person vorzutäuschen, dass es sich bei dem E-Mail-Versender, dem Anbieter der Internetseite oder dem Versender der SMS um eine vertrauenswürdige Person oder Institution handelt. So werden bei Phishing-Angriffen beispielsweise Internetauftritte bekannter Banken nachgeahmt, um auf diese Weise die von dem Phishing-Angriff betroffene Person dazu zu bewegen, persönliche und vertrauliche Bankdaten auf der bereitgestellten und gefälschten Internetseite einzugeben.

Der Erfolg einer Phishing-Attacke hängt insbesondere davon ab, wie vertrauenswürdig die angegriffene Person die jeweilige Phishing-Attacke einstuft. Dabei kommt es zum einen auf die Aufmerksamkeit der betroffenen Person und deren Kenntnis über etwaige Phishing-Angriffe und zum anderen auf die Qualität des jeweiligen Phishing-Angriffs an.

Um die Aufmerksamkeit zu schulen und zu erhöhen, ist es bekannt, dass Unternehmen für Ihre Mitarbeiter geeignete Schulungen anbieten, in denen den Mitarbeitern die Gefahren solcher Phishing-Angriffe erläutert werden. Darüber hinaus ist es bekannt, dass Unternehmen Ihre Mitarbeiter auch durch simulierte Phishing-Attacken schulen.

Ein derartiges Verfahren zur Simulation von Phishing-Attacken wird in der Druckschrift US 2016/0036829 A1 beschrieben. Bei dem in dieser Druckschrift beschriebenen System wählt ein Administrator für die Schulung einer bestimmten Person beispielsweise eine vorbereitete Phishing-E-Mail aus, die dann vor dem Angriff durch den Administrator personalisiert wird. Das System überwacht, ob der Angriff auf die Person erfolgreich war und die Person beispielsweise einen Link in der E-Mail angeklickt hat. In diesem Fall informiert das System den Administrator.

Zur Simulation der Phishing-Attacken ist es erforderlich, geeignete und personalisierte Phishing-Dokumente zu erstellen. Hierfür ist es zunächst erforderlich, einen üblicherweise möglichst allgemein gehaltenen Brieftext zu entwerfen, der inhaltlich derart vorbereitet ist, dass er an eine Vielzahl von Personen gesendet werden kann. Die Personalisierung dieses Brieftexts besteht nach der Erstellung des Brieftexts in einem ersten Schritt darin, eine Empfängeradresse der Person zu ermitteln, an die das Phishing-Dokument gesandt werden soll.

Um qualitativ hochwertige Phishing-Dokumente zu erstellen, ist es aus dem Stand der Technik auch bekannt, die vorbereiteten Brieftexte weiter zu personalisieren und zusätzliche personenbezogene Informationen der Person zu verwenden, an die das jeweilige Phishing-Dokument gerichtet werden soll. So ist es beispielsweise bekannt, der mit dem Phishing-Angriff angegriffenen Person durch das verwendete Phishing-Dokument vorzutäuschen, dass es sich bei dem Absender des Phishing-Dokuments beispielsweise um einen Kollegen aus einer anderen Abteilung des gleichen Unternehmens handelt. Darüber hinaus können in den Phishing-Dokumenten auch weitere Informationen wie beispielsweise Hobbies und Interessen der angegriffenen Person verwendet werden.

Die für eine derart weitgehende Personalisierung erforderlichen Informationen werden üblicherweise aus den allgemein zugänglichen Informationen in sozialen Netzwerken zusammengestellt. Die Erstellung besonders weitgehend personalisierter Phishing-Dokumente insbesondere auch unter Verwendung und Berücksichtigung der Interessen und Hobbies der angegriffenen Personen, erfordert derzeit aufwendige, manuell durchgeführte Personenrecherchen sowie eine darauffolgende manuelle Anpassung der zuvor vorbereiteten Brieftexte.

Als Aufgabe der Erfindung wird es angesehen, den Aufwand für die Erstellung insbesondere besonders aufwendig personalisierter Phishing-Dokumente zu verringern und möglichst zu automatisieren.

Diese Aufgabe wird erfindungsgemäß durch ein Verfahren zur automatisierten Erstellung eines an eine vorgegebene Person gerichteten Phishing-Dokuments gelöst, wobei personenbezogene Daten der Person in einer Personendatenbank gespeichert sind, wobei anonyme und kategorisierbare Personeneigenschaften einer beliebigen Personenanzahl in einer hierarchisch organisierten Eigenschaftsdatenbank hinterlegt sind, wobei jeder Personeneigenschaft ein Relevanzwert zugeordnet ist, wobei mindestens eine in den personenbezogenen Daten enthaltene Eigenschaft der Person eine Entsprechung in der Eigenschafsdatenbank hat, wobei diese Entsprechung jeweils eine Entsprechungseigenschaft bildet, wobei in einem Überprüfungsschritt durch einen automatisierten Abgleich der Entsprechungseigenschaften und der in der Eigenschaftsdatenbank gespeicherten Personeneigenschaften überprüft wird, ob eine der Entsprechungseigenschaften einer phishing-dokumentspezifischen Vorgabepersoneneigenschaft hierarchisch nachgeordnet ist, wobei diese nachgeordnete Entsprechungseigenschaft eine Erstellungseigenschaft bildet, wobei das Phishing-Dokument in einem nachfolgenden Erstellungsschritt auf Grundlage der Erstellungseigenschaft erstellt wird, wenn diese Anforderung erfüllt ist, wobei in dem Erstellungsschritt überprüft wird, ob der Relevanzwert der Erstellungseigenschaft einem vorgegebenen Sollrelevanzwert entspricht, wobei die Erstellungseigenschaft als Vorbereitungseigenschaft ausgewählt wird und zur Vorbereitung des Phishing-Dokuments verwendet wird, wenn der zugeordnete Relevanzwert dem Sollrelevanzwert entspricht, wobei eine hierarchisch über der Erstellungseigenschaft angeordnete Personeneigenschaft, deren Relevanzwert dem Sollrelevanzwert entspricht, als Vorbereitungseigenschaft ausgewählt wird und zur Vorbereitung des Phishing-Dokuments verwendet wird, wenn der Erstellungseigenschaft zugeordnete Relevanzwert dem Sollrelevanzwert nicht entspricht und wobei nach der Bestimmung der Vorbereitungseigenschaft das Phishing-Dokument auf Grundlage eines vorgegebenen Vorlagedokuments unter Verwendung der Vorbereitungseigenschaft erstellt wird.

Grundlage des erfindungsgemäßen Verfahrens sind die zuvor manuell oder automatisiert ermittelten personenbezogenen Daten der Person, die in einer temporären Datenbank gespeichert werden. Diese personenbezogenen Daten können insbesondere aus den von der angegriffenen Person in sozialen Netzwerken bereitgestellten und veröffentlichten Informationen stammen. Aus dem Stand der Technik sind Verfahren bekannt, um diese personenbezogenen Informationen automatisiert abzurufen und in der Personendatenbank abzuspeichern.

Die in der Personendatenbank hinterlegten personenbezogenen Daten umfassen neben dem Namen und den Kontaktdaten der Person vorteilhafterweise insbesondere auch Angaben zu den Interessen und Hobbies sowie Angaben zu den persönlichen Kontakten der Person. Die von den Personen in den sozialen Netzwerken bereitgestellten und gegebenenfalls automatisiert in der Personendatenbank gespeicherten personenbezogenen Daten können üblicherweise nicht ohne weiteres in vorbereiteten Brieftexten übernommen und weiterverarbeitet werden. Beispielsweise ist es möglich, dass die Person Ihre Hobbies und Interessen auf eine Art und Weise angibt, die nicht ohne weiteres in den möglichst allgemeingültig formulierten Brieftexten eingefügt werden können.

Zum Beispiel könnte die Person als Hobby angegeben haben, dass die Person Fußball in dem Fußballverein XY spielt. Aus dieser Angabe lässt sich auch unmittelbar schließen, dass sich die Person für Fußball im Allgemeinen und darüber hinaus auch für Sport interessiert. Ein möglichst allgemein gehaltener und für viele Phishing-Angriffe verwendbarer Brieftext bzw. Vorlagedokument könnte sich beispielsweise allgemein mit dem Thema Sport beschäftigen und in dem Brieftext könnte dann die Spezifikation der Sportart vorgesehen sein, für die sich die jeweils angegriffene Person interessiert. Die Angabe, dass die Person Fußball bei dem Verein XY spielt, eignet sich bei einem derartigen Brieftext nicht unmittelbar dazu, um in dem Brieftext verwendet zu werden. Vielmehr ist es erforderlich festzustellen, dass sich aus dem Interesse "Fußballer beim Fußballverein XY" auch das Interesse "Fußball" und das allgemeinere Interesse "Sport" ableiten lässt.

Zu diesem Zweck ist erfindungsgemäß die von den personenbezogenen Daten und der Personendatenbank unabhängige Eigenschaftsdatenbank vorgesehen, in der kategorisierbare Personeneigenschaften anonymisiert und hierarchisch geordnet hinterlegt sind. Die hierarchische Ordnung der Eigenschaftsdatenbank folgt vorteilhafterweise einer Baumstruktur.

Die Eigenschaftsdatenbank kann in einer oberen Hierarchiestufe beispielsweise allgemein formulierte Interessenkategorien beinhalten, die auf eine Vielzahl von Personen angewandt werden können. Diese allgemeinen Interessenkategorie könnten zum Beispiel "Freizeitinteressen", "Vereinsinteressen" und "berufliche Interessen" lauten. In einer den Freizeitinteressen nachgeordneten Hierarchieebene könnten beispielsweise die etwas konkreteren Angaben "Sport", "Autos" und "Elektronik" enthalten sein. In einer der Kategorie "Sport" nachgelagerten Hierarchiestufe könnten die verschiedenen Sportarten weiter spezifiziert sein und in einer sich daran anschließenden Hierarchiestufe beispielsweise unterhalb einer Kategorie "Fußball" verschiedene Fußballvereine angelegt sein.

Diese Fußballvereine könnten sich gleichermaßen auch hierarchisch unterhalb der Oberkategorie "Vereinsinteressen" finden. Das bedeutet, dass ein konkretes Interesse durchaus mehrfach in der Eigenschaftsdatenbank vorgesehen sein kann, sofern dieses konkrete Interesse mehreren hierarchisch übergeordneten allgemeineren Interessen zugeordnet werden kann. Es ist auch möglich und erfindungsgemäß vorgesehen, dass das konkrete Interesse in der Eigenschaftsdatenbank nur einmalig enthalten ist, jedoch mit mehreren hierarchisch übergeordneten Interessen verbunden ist.

Mit Hilfe einer derartig aufgebauten Eigenschaftsdatenbank kann nun ein allgemein gehaltener Brieftext für eine vorgegebene Person individualisiert werden. Zu diesem Zweck wird zunächst in dem Überprüfungsschritt automatisiert überprüft, ob in der Eigenschaftsdatenbank hinterlegte Interessen der Person, die Entsprechungseigenschaften, einer phishing-dokumentspezifischen Vorgabeeigenschaft hierarchisch nachgeordnet ist. Sofern an die Person beispielsweise ein Phishing-Dokument versandt werden soll, dessen Brieftext sich an sportlich interessierte Personen richtet, so ist es in dem Überprüfungsschritt zunächst erforderlich festzustellen, ob sich dieser Brieftext für die Person eignet, also ob die Person sportlich interessiert ist.

Da mit dem erfindungsgemäßen Verfahren weitergehend personalisierte Phishing-Dokumente erstellt werden können sollen, ist es bei dieser Überprüfung zusätzlich auch erforderlich, dass die von der Person bekannten und in der Personendatenbank gespeicherten Entsprechungseigenschaften der Vorgabepersoneneigenschaft hierarchisch nachgeordnet sind, um möglichst sicherzustellen, dass weitere und speziellere Interesse der Person bekannt sind, die zur Personalisierung des Vorlagedokuments verwendet werden können. In dem Beispiel könnte es sich hierbei um die Entsprechungseigenschaft "Fußballverein XY" handeln, die hierarchisch der Personeneigenschaft Fußball nachgeordnet ist, welche wiederum hierarchisch der Vorgabepersoneneigenschaft "Sport" nachgeordnet ist.

Um für die Personalisierung des Vorlagedokuments geeignete Personeneigenschaften aus der Eigenschaftsdatenbank auszuwählen, sind den verschiedenen und in der Eigenschaftsdatenbank hinterlegten Personeneigenschaften Relevanzwerte zugeordnet. In dem Vorlagedokument bzw. für die Erstellung des Vorlagedokuments kann dann beispielsweise vorgesehen sein, dass an einer bestimmten Stelle des Dokuments eine hierarchisch der Vorgabepersoneneigenschaft nachgeordnete Personeneigenschaft mit einem vorgegebenen Sollrelevanzwert eingesetzt werden soll. Diese Personeneigenschaft wird bei dem erfindungsgemäßen Verfahren in dem Erstellungsschritt als Vorbereitungseigenschaft ausgewählt, wobei es sich bei der Vorbereitungseigenschaft um die Erstellungseigenschaft oder eine hierarchisch der Erstellungseigenschaft übergeordnete Personeneigenschaft handelt.

In dem Beispiel könnte in dem Brieftext vorgesehen sein, dass die Sportart, für die sich die angegriffene Person interessiert, spezifiziert werden muss. Den Sportarten könnte beispielsweise ein Relevanzwert von 50 zugeordnet sein und für die Individualisierung des Brieftexts entsprechend vorgegeben sein, dass an der vorgesehenen Stelle des Brieftexts die Personeneigenschaft mit dem Sollrelevanzwert von 50 eingetragen werden soll. Der Personeneigenschaft "Fußballverein XY" könnte beispielsweise ein Relevanzwert von 10 zugeordnet sein. Die Entsprechungseigenschaft "Fußballverein XY" weist also einen geringeren Relevanzwert als der für die Erstellung des Brieftexts erforderliche Sollrelevanzwert auf. Daraufhin wird überprüft, ob in der Eigenschaftsdatenbank ein hierarchisch übergeordneter Personeneigenschaftseintrag vorhanden ist, der den erforderlichen Relevanzwert aufweist. Im Beispiel handelt es sich hierbei um die Angabe "Fußball" die dann als Vorbereitungseigenschaft ausgewählt wird und an die vorgesehene Stelle in dem Vorlagedokument in den Brieftext eingefügt wird.

Das erfindungsgemäße Verfahren kann vollständig automatisiert durchgeführt werden, sofern die Personendatenbank, die Eigenschaftsdatenbank sowie das Vorlagedokument vorhanden sind. Die Personendatenbank kann ebenfalls mit aus dem Stand der Technik bekannten Mitteln vollständig automatisiert erstellt werden. Die Erstellung des Vorlagedokuments erfordert zumindest derzeit manuelle Anpassungen. Auch die Erstellung der Eigenschaftsdatenbank erfordert derzeit noch manuelle Eingriffe um bislang nicht kategorisierte und in der Personendatenbank hinterlegte Interessen in die Eigenschaftsdatenbank einzufügen, dort zu hinterlegen und diesen Personeneigenschaften Relevanzwerte zuzuordnen. Es ist jedoch denkbar, auch die Erstellung der Eigenschaftsdatenbank zu automatisieren, da die Kategorisierung und Zuordnung von Relevanzwerten regelbasiert erfolgen kann.

Eine weitergehende Personalisierung des Phishing-Dokuments kann dadurch erreicht werden, dass Personeneigenschaften, die unterschiedlichen Zweigen der hierarchisch organisierten Eigenschaftsdatenbank zuzuordnen sind, in dem Vorlagedokument bzw. dem Brieftext vorgesehen sind und verwendet werden sollen. Zu diesem Zweck ist erfindungsgemäß vorgesehen, dass mehrere Vorgabepersoneneigenschaften vorgegeben sind und dass für jede Vorgabepersoneneigenschaft eine Erstellungseigenschaft bestimmt wird und dass für sämtliche Erstellungseigenschaften Vorbereitungseigenschaften bestimmt werden, die in dem Vorlagedokument verwendet werden.

Eine weitergehende Personalisierung ist auch dadurch möglich, dass für mindestens eine Erstellungseigenschaft mindestens zwei Vorbereitungseigenschaften bestimmt werden, wobei sich Relevanzwerte der mindestens zwei Vorbereitungseigenschaften unterscheiden. In dem Beispiel könnte ein Abschnitt des Brieftexts beispielsweise lauten: "Du interessiert Dich ja für [Sportart] und bist Mitglied im [Sportverein]." Bei den in dem Beispieltext in eckigen Klammern gefassten Begriffe handelt sich um zwei Vorgabeeigenschaften, die unterschiedliche Relevanzwerte aufweisen und derselben Verzweigung in der hierarchisch strukturierten Eigenschaftsdatenbank zugeordnet sind. Auf diese Weise können besonders aufwendig formulierte und besonders personalisierte Phishing-Dokumente vorbereitet werden.

Bei einer besonders vorteilhaften Ausgestaltung des erfindungsgemäßen Verfahrens ist vorgesehen, dass für mindestens eine Erstellungseigenschaft mindestens zwei Vorbereitungseigenschaften bestimmt werden, wobei sich Hierarchiestufen der mindestens zwei Vorbereitungseigenschaften unterscheiden. Vorteilhafterweise ist erfindungsgemäß vorgesehen, dass Relevanzwerte von Personeneigenschaften hierarchisch übergeordneter Kategorien größer sind als Relevanzwerte von niedriger kategorisierten Personeneigenschaften. Es ist jedoch auch möglich und erfindungsgemäß vorgesehen, dass die Relevanzwerte der Hierarchie nicht folgen, um auf diese Weise eine weitergehende Strukturierung der Eigenschaftsdatenbank auch mit solchen Personeneigenschaften zu erreichen, die üblicherweise nicht in Brieftexten verwendet werden sollen. Um in diesem Fall zu einer Erstellungseigenschaft mindestens zwei hierarchisch übergeordnete Personeneigenschaften bestimmen zu können, ist als weiteres Unterscheidungskriterium erfindungsgemäß vorgesehen, dass die mindestens zwei Vorbereitungseigenschaften unterschiedlichen Hierarchiestufen zugeordnet sein sollen.

Es ist durchaus möglich und erfindungsgemäß auch vorgesehen, dass einer Vorgabepersoneneigenschaft mehrere hierarchisch nachgeordnete Entsprechungseigenschaften zugeordnet werden können. Aus diesem Grund ist erfindungsgemäß auch vorgesehen, dass in dem Überprüfungsschritt sämtliche Entsprechungseigenschaften bestimmt werden, um auf Grundlage dieser Entsprechungseigenschaften nachfolgend eine Auswahl der geeigneten Erstellungseigenschaft vornehmen zu können. Die hierfür verwendete Auswahlregel kann die verschiedenen Erstellungseigenschaften auf verschiedene Art und Weisen beurteilen und auswählen. Beispielsweise könnte eine Auswahl zufällig erfolgen.

Bei den Relevanzwerten kann es sich erfindungsgemäß um Zahlenwerte handeln. Es kann sich jedoch auch um qualitative Angaben wie beispielsweise "wichtig", "unwichtig", "geeignet" oder dergleichen handeln. Es kann sich bei den Relevanzwerten auch um Relevanzwertbereiche handeln. Es ist auch möglich und erfindungsgemäß vorgesehen, dass es sich bei den Sollrelevanzwerten um Sollrelevanzwertbereiche handelt. So kann beispielsweise in dem Vorlagedokument vorgesehen sein, dass an eine vorgegebene Stelle eine Personeneigenschaft aus der Eigenschaftsdatenbank ermittelt und als Vorbereitungseigenschaft verwendet werden soll, die ein Relevanzwert zwischen 40 und 60 aufweist.

Zur Erstellung der Eigenschaftsdatenbank ist erfindungsgemäß vorgesehen, dass in einem dem Überprüfungsschritt vorhergehenden Personendatenerfassungsschritt automatisiert personenbezogene Daten der Person von mindestens einer vorgegebenen, öffentlich zugänglichen Datenbank ermittelt werden, wobei in einem Personendatenzuordnungsschritt die ermittelten personenbezogenen Daten nach einem für jede verwendete öffentliche Datenbankregelsatz kategorisiert und der Personendatenbank temporär abgespeichert werden, wobei in einem Abgleichschritt automatisiert überprüft wird, ob in der Personendatenbank in dem Personendatenzuordnungsschritt gespeicherte anonymisierbare personenbezogene Daten in der Eigenschaftsdatenbank hinterlegt sind, und wobei für nicht in der Eigenschaftsdatenbank hinterlegte anonymisierbare personenbezogene Daten jeweils ein neuer Personeneigenschaftsdatensatz in die Eigenschaftsdatenbank eingefügt wird, wobei jeder Personeneigenschaftsdatensatz mindestens eine Personeneigenschaftsbezeichnung eine hierarchische Stellung des Personeneigenschaftsdatensatz im Verhältnis zu mindestens einem weiteren Personeneigenschaftsdatensatz aufweist.

Der Personendatenerfassungsschritt kann automatisiert durch automatisierte Abfragen von den öffentlich zugänglichen Datenbanken und insbesondere von sozialen Netzwerken durchgeführt werden. Ebenso kann der Personendatenzuordnungsschritt automatisiert erfolgen.

In dem Personendatenzuordnungsschritt werden die automatisiert ermittelten personenbezogenen Daten dem jeweiligen Datenbankregelsatz entsprechend in die Personendatenbank überführt. Die Datenbankregelsätze beschreiben dabei die von der jeweiligen öffentlichen Datenbank verwendete Datenbankstruktur. Beispielsweise werden personenbezogene Interessen in einer ersten Datenbank als "Hobbies" und einer zweiten Datenbank als "Interessen" bezeichnet. Um derartige unterschiedliche Datenbankstrukturen in eine gemeinsame Personendatenbank überführen zu können, sind entsprechende Datenbankregelsätze vorgesehen und vorgegeben.

Nach der automatisierten Erstellung der Personendatenbank wird ebenfalls automatisiert überprüft, ob eine oder mehrere der ermittelten und anonymisierbaren Personeneigenschaften in der Eigenschaftsdatenbank hinterlegt sind. In diesem Fall wird der jeweiligen und in der Personendatenbank hinterlegten Personeneigenschaft vorteilhafterweise eine dem entsprechenden Eintrag in der Eigenschaftsdatenbank zugeordnete Datensatz-ID zugewiesen, um später eine einfache Durchführung des Überprüfungsschritts sowie der nachfolgenden Schritte zu ermöglichen.

Um die Eigenschaftsdatenbank ständig weiterzuentwickeln und für zukünftige Phishing-Angriffe bzw. für die Vorbereitung von weiteren Phishing-Dokumenten vorzubereiten und zu verbessern, werden nicht bereits in der Eigenschaftsdatenbank hinterlegte Personeneigenschaften der Eigenschaftsdatenbank hinzugefügt. Dabei wird die jeweilige Personeneigenschaft kategorisiert und es wird der Personeneigenschaft vorteilhafterweise ein Relevanzwert zugeordnet.

Der zu einer Personeneigenschaft gehörige Personeneigenschaftsdatensatz in der Eigenschaftsdatenbank umfasst vorteilhafterweise die Personeneigenschaftsbezeichnung und die hierarchische Stellung des Personeneigenschaftsdatensatzes im Verhältnis zu mindestens einem weiteren Personeneigenschaftsdatensatz. Des Weiteren enthält der Personeneigenschaftsdatensatz vorteilhafterweise den Referenzwert. Es ist auch möglich und erfindungsgemäß vorgesehen, dass der Personeneigenschaftsdatensatz weitere Informationen wie beispielsweise alternative Bezeichnungen oder dergleichen enthält.

Weitere vorteilhafte Ausgestaltungen des erfindungsgemäßen Verfahrens werden anhand eines in der Zeichnung dargestellten Ausführungsbeispiels näher erläutert.

Es zeigt:
Fig. 1 eine schematische Darstellung einer Eigenschaftsdatenbank und
Fig. 2 ein schematisch dargestellter Ablauf des erfindungsgemäßen Verfahrens.

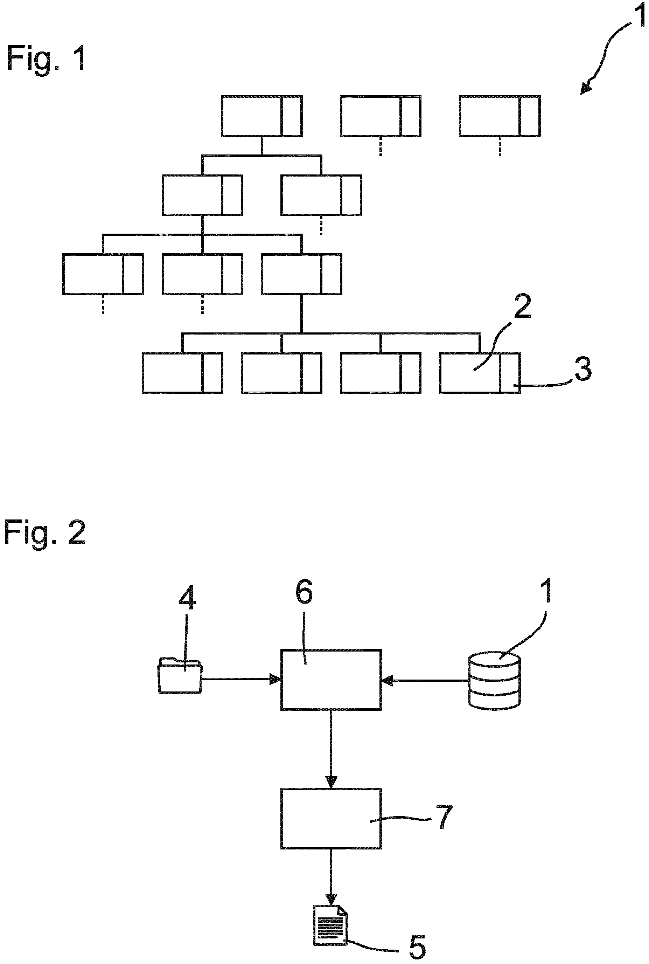

In Figur 1 ist schematisch eine Struktur einer hierarchisch organisierten Eigenschaftsdatenbank 1 dargestellt. In der Eigenschaftsdatenbank 1 sind anonyme und kategorisierbare Personeneigenschaften 2 einer beliebigen Personenanzahl hinterlegt, wobei jeder Personeneigenschaft 2 ein Relevanzwert 3 zugeordnet ist. Die gestrichelt dargestellten Verbindungslinien kennzeichnen weitergehende hierarchische Abhängigkeiten nicht dargestellter weiterer Personeneigenschaften. In der Darstellung ist exemplarisch eine Personeneigenschaft 2 und ein Relevanzwert 3 mit einem Bezugszeichen gekennzeichnet.

Diese Eigenschaftsdatenbank 1 wird gemeinsam mit einer Personendatenbank 4 zur automatisierten Durchführung des in Figur 2 schematisch dargestellten Verfahrens zur Erstellung eines Phishing-Dokuments 5 verwendet. Zunächst wird in einem Überprüfungsschritt 6 durch einen automatisierten Abgleich der in der Personendatenbank 4 zu einer bestimmten Person hinterlegten Entsprechungseigenschaften und der in der Eigenschaftsdatenbank 1 gespeicherten Personeneigenschaften 2 überprüft, ob eine der Entsprechungseigenschaften einer phishing-dokumentspezifischen Vorgabepersoneneigenschaft hierarchisch nachgeordnet ist. Diese nachgeordnete Entsprechungseigenschaft bildet dann eine Erstellungseigenschaft. Das Phishing-Dokument 5 wird in einem nachfolgenden Erstellungsschritt 7 auf Grundlage der Erstellungseigenschaft erstellt, wenn diese Anforderung erfüllt ist. In dem Erstellungsschritt 7 wird überprüft, ob der Relevanzwert 3 der Erstellungseigenschaft einem vorgegebenen Sollrelevanzwert entspricht. Sofern dies der Fall ist, wird die Erstellungseigenschaft als Vorbereitungseigenschaft ausgewählt wird und zur Vorbereitung des Phishing-Dokuments 5 verwendet. Anderenfalls wird eine hierarchisch über der Erstellungseigenschaft angeordnete Personeneigenschaft 2, deren Relevanzwert 3 dem Sollrelevanzwert entspricht, als Vorbereitungseigenschaft ausgewählt wird und zur Vorbereitung des Phishing-Dokuments 5 verwendet. Nach der Bestimmung der Vorbereitungseigenschaft wird das Phishing-Dokument 5 auf Grundlage eines vorgegebenen Vorlagedokuments unter Verwendung der Vorbereitungseigenschaft erstellt.

## Patentansprüche

1. Verfahren zur automatisierten Erstellung eines an eine vorgegebene Person gerichteten Phishing-Dokuments (5), wobei personenbezogene Daten der Person in einer Personendatenbank (4) gespeichert sind, wobei anonyme und kategorisierbare Personeneigenschaften (2) einer beliebigen Personenanzahl in einer hierarchisch organisierten Eigenschaftsdatenbank (1) hinterlegt sind, wobei jeder Personeneigenschaft (2) ein Relevanzwert (3) zugeordnet ist, wobei mindestens eine in den personenbezogenen Daten enthaltene Eigenschaft der Person eine Entsprechung in der Eigenschaftsdatenbank (1) hat,
wobei diese Entsprechung jeweils eine Entsprechungseigenschaft bildet,
wobei in einem Überprüfungsschritt (6) durch einen automatisierten Abgleich der Entsprechungseigenschaften und der in der Eigenschaftsdatenbank gespeicherten Personeneigenschaften (2) überprüft wird, ob eine der Entsprechungseigenschaften einer phishing-dokumentspezifischen Vorgabepersoneneigenschaft hierarchisch nachgeordnet ist, wobei diese nachgeordnete Entsprechungseigenschaft eine Erstellungseigenschaft bildet,
wobei das Phishing-Dokument (5) in einem nachfolgenden Erstellungsschritt (7) auf Grundlage der Erstellungseigenschaft erstellt wird, wenn diese Anforderung erfüllt ist,
wobei in dem Erstellungsschritt überprüft wird, ob der Relevanzwert (3) der Erstellungseigenschaft einem vorgegebenen Sollrelevanzwert entspricht,
wobei die Erstellungseigenschaft als Vorbereitungseigenschaft ausgewählt wird und zur Vorbereitung des Phishing-Dokuments (5) verwendet wird, wenn der zugeordnete Relevanzwert (3) dem Sollrelevanzwert entspricht,
wobei eine hierarchisch über der Erstellungseigenschaft angeordnete Personeneigenschaft (2), deren Relevanzwert (3) dem Sollrelevanzwert entspricht, als Vorbereitungseigenschaft ausgewählt wird und zur Vorbereitung des Phishing-Dokuments (5) verwendet wird, wenn der der Erstellungseigenschaft zugeordnete Relevanzwert (3) dem Sollrelevanzwert nicht entspricht und wobei nach der Bestimmung der Vorbereitungseigenschaft das Phishing-Dokument (5) auf Grundlage eines vorgegebenen Vorlagedokuments unter Verwendung der Vorbereitungseigenschaft erstellt wird.

2. Verfahren gemäß Anspruch 1, **dadurch gekennzeichnet, dass** mehrere Vorgabepersoneneigenschaften vorgegeben sind und dass für jede Vorgabepersoneneigenschaft eine Erstellungseigenschaft bestimmt wird und dass für sämtliche Erstellungseigenschaften Vorbereitungseigenschaften bestimmt werden, die in dem Vorlagedokument verwendet werden.

3. Verfahren gemäß Anspruch 1 oder Anspruch 2, **dadurch gekennzeichnet, dass** für mindestens eine Erstellungseigenschaft mindestens zwei Vorbereitungseigenschaften bestimmt werden, wobei sich Relevanzwerte (3) der mindestens zwei Vorbereitungseigenschaften unterscheiden.

4. Verfahren gemäß einem der voranstehenden Ansprüche, **dadurch gekennzeichnet, dass** für mindestens eine Erstellungseigenschaft mindestens zwei Vorbereitungseigenschaften bestimmt werden, wobei sich Hierachiestufen der mindestens zwei Vorbereitungseigenschaften unterscheiden.

5. Verfahren gemäß einem der voranstehenden Ansprüche, **dadurch gekennzeichnet, dass** in dem Überprüfungsschritt (6) zunächst sämtliche der Vorgabepersoneneigenschaft hierarchisch nachgeordnete Entsprechungseigenschaften bestimmt werden und anschließend eine der Entsprechungseigenschaften als Erstellungseigenschaft nach einer vorgegeben Auswahlregel ausgewählt wird.

6. Verfahren gemäß einem der voranstehenden Ansprüche, **dadurch gekennzeichnet, dass** in einem dem Überprüfungsschritt (6) vorhergehenden Personendatenerfassungsschritt automatisiert personenbezogene Daten der Person von mindestens einer vorgegebenen, öffentlich zugänglichen Datenbank ermittelt werden, wobei in einem Personendatenzuordnungsschritt die ermittelten personenbezogenen Daten nach einem für jede verwendete öffentliche Datenbank vorgegebenen Datenbankregelsatz kategorisiert und in der Personendatenbank temporär abgespeichert werden, wobei in einem Abgleichschritt automatisiert überprüft wird, ob in der Personendatenbank in dem Personendatenzuordnungsschritt gespeicherte anonymisierbare personenbezogene Daten in einer Eigenschaftsdatenbank (1) hinterlegt sind, und wobei für nicht in der Eigenschaftsdatenbank (1) hinterlegte anonymisierbare personenbezogene Daten jeweils ein neuer Personeneigenschaftsdatensatz in die Eigenschaftsdatenbank (1) eingefügt wird, wobei jeder Personeneigenschaftsdatensatz mindestens eine Personeneigenschaftsbezeichnung und eine hierarchische Stellung des Personeneigenschaftsdatensatz im Verhältnis zu mindestens einem weiteren Personeneigenschaftsdatensatz aufweist.

## Claims

1. Method for the automated creation of a phishing document (5) directed to a predetermined person, wherein personal data of the person are stored in a database of persons (4), wherein anonymous and categorisable personal properties (2) of any number of persons are filed in a hierarchically organised properties database (1), wherein a relevance value (3) is assigned to each personal property (2), wherein at least one property of the person contained in the personal data has a correspondence in the properties database (1),
wherein this correspondence forms a correspondence property in each case,
wherein in a verification step (6), it is verified by an automated comparison of the correspondence properties and the personal properties (2) stored in the properties database whether one of the correspondence properties is hierarchically subordinate to a phishing-document-specific specified personal property, wherein this subordinate correspondence property forms a creation property,
wherein the phishing document (5) is created in a subsequent creation step (7) on the basis of the creation property if this requirement is met,
wherein it is verified in the creation step whether the relevance value (3) of the creation property corresponds to a predetermined target relevance value,
wherein the creation property is selected as a preparation property and used to prepare the phishing document (5) if the assigned relevance value (3) corresponds to the target relevance value,
wherein a personal property (2) arranged hierarchically above the creation property and with a relevance value (3) corresponding to the target relevance value is selected as a preparation property and used to prepare the phishing document (5) if the relevance value (3) assigned to the creation property does not correspond to the target relevance value and
wherein following determination of the preparation property, the phishing document (5) is created on the basis of a predetermined template document using the preparation property.

2. Method according to claim 1, **characterised in that** several specified personal properties are predetermined and that a creation property is determined for each specified personal property and that preparation properties, which are used in the template document, are determined for all creation properties.

3. Method according to claim 1 or claim 2, **characterised in that** for at least one creation property, at least two preparation properties are determined, wherein relevance values (3) of the at least two preparation properties differ.

4. Method according to any one of the preceding claims, **characterised in that** for at least one creation property, at least two preparation properties are determined, wherein hierarchical levels of the at least two preparation properties differ.

5. Method according to any one of the preceding claims, **characterised in that** in the verification step (6), all of the correspondence properties hierarchically subordinate to the specified personal property are determined initially and then one of the correspondence properties is selected as creation property according to a predetermined selection rule.

6. Method according to any one of the preceding claims, **characterised in that** in a personal data detection step preceding the verification step (6), personal data of the person is automatically determined from at least one predetermined, publicly accessible database, wherein in a personal data assignment step, the personal data determined is categorised according to a set of rules predetermined for each public database used and is stored temporarily in the database of persons, wherein it is verified automatically in a matching step whether anonymisable personal data stored in the database of persons in the personal data assignment step is filed in a properties database (1), and wherein for anonymisable personal data not filed in the properties database (1) a new personal property data record is inserted in each case into the properties database (1), wherein each personal property data record has at least one personal property designation and a hierarchical position of the personal property data record in relation to at least one other personal property data record.

## Revendications

1. Procédé pour la création automatique d'un document d'hameçonnage (5) destiné à une personne déterminée, dans lequel des données personnelles de la personne sont enregistrées dans une base de données personnelles (4), des propriétés de la personne (2) anonymes et pouvant être catégorisées d'un nombre quelconque de personnes étant stockées dans une base de données de propriétés (1) organisée de manière hiérarchique, une valeur d'importance (3) étant attribuée à chaque propriété de la personne (2), au moins une propriété de la personne comprise dans les données personnelles ayant une correspondance dans la base de données de propriétés (1),
dans lequel cette correspondance forme respectivement une propriété de correspondance,
dans lequel, dans une étape de vérification (6), il est vérifié par une comparaison automatique des propriétés de correspondance et des propriétés de la personne (2) enregistrées dans la base de données de propriétés si une des propriétés de correspondance est hiérarchiquement subordonnée à une propriété prédéfinie de la personne spécifique du document d'hameçonnage, cette propriété de correspondance subordonnée formant une propriété de création,
dans lequel le document d'hameçonnage (5) est créé, dans une étape de création (7) suivante, sur la base de la propriété de création, lorsque cette exigence est remplie,
dans lequel, dans l'étape de création, il est vérifié si la valeur d'importance (3) de la propriété de création correspond à une valeur d'importance de consigne prédéfinie,
dans lequel la propriété de création est sélectionnée comme propriété de préparation et est utilisée pour la préparation du document d'hameçonnage (5) si la valeur d'importance (3) attribuée correspond à la valeur d'importance de consigne, dans lequel une propriété de la personne (2) située hiérarchiquement au-dessus de la propriété de création et dont la valeur d'importance (3) correspond à la valeur d'importance de consigne, est sélectionnée comme propriété de préparation et est utilisée pour préparer le document d'hameçonnage (5) quand la valeur d'importance (3) attribuée à la propriété de création ne correspond pas à la valeur d'importance de consigne et dans lequel, après la détermination de la propriété de préparation, le document d'hameçonnage (5) est rédigé sur la base d'un document modèle prédéfini en utilisant la propriété de préparation.

2. Procédé selon la revendication 1, **caractérisé en ce que** plusieurs propriétés cibles de la personne sont prédéfinies et **en ce qu'**une propriété de création est déterminée pour chaque propriété prédéfinie de la personne et **en ce que**, pour toutes les propriétés de création, des propriétés de préparation sont déterminées, qui sont utilisées dans le document modèle.

3. Procédé selon la revendication 1 ou la revendication 2, **caractérisé en ce qu'**au moins deux propriétés de préparation sont déterminées pour au moins une propriété de création, les valeurs d'importance (3) des au moins deux propriétés de préparation étant différentes.

4. Procédé selon l'une des revendications précédentes, **caractérisé en ce qu'**au moins deux propriétés de préparation sont déterminées pour au moins une propriété de création, les niveaux hiérarchiques des au moins deux propriétés de préparation étant différents.

5. Procédé selon l'une des revendications précédentes, **caractérisé en ce que**, dans l'étape de vérification (6), d'abord toutes les propriétés de correspondance subordonnées hiérarchiquement à la propriété prédéfinie de la personne sont déterminées et une des propriétés de correspondance est ensuite sélectionnée comme propriété de création selon une règle de sélection prédéfinie.

6. Procédé selon l'une des revendications précédentes, **caractérisé en ce que**, dans une étape de collecte de données personnelles précédant l'étape de vérification (6), des données personnelles de la personne sont détectées de manière automatisée dans au moins une base de données prédéfinie accessible publiquement, dans lequel, dans une étape d'attribution de données personnelles, les données personnelles détectées sont catégorisées selon un ensemble de règles de base de données prédéfini pour chaque base de données publique utilisée et enregistrées temporairement dans la base de données personnelles, dans lequel, dans une étape de comparaison, il est vérifié de manière automatisée, si, dans la base de données personnelles, des données personnelles pouvant être anonymisées, enregistrées dans l'étape d'attribution de données personnelles, sont stockées dans une base de données de propriétés (1), et dans lequel, pour des données personnelles pouvant être anonymisées non stockées dans la base de données de propriétés (1), un nouveau jeu de données de propriétés de la personne est respectivement inséré dans la base de données de propriétés (1), dans lequel chaque jeu de données de propriété de la personne comporte au moins une désignation de propriété de la personne et une position hiérarchique du jeu de données de propriété de la personne par rapport à au moins un autre jeu de données de propriété de la personne.
